# EUROPEAN PATENT SPECIFICATION

(11) **EP 2 366 277 B1**
(45) Date of publication and mention of the grant of the patent: **11.07.2012**
(21) Application number: 11158485.0
(22) Date of filing: 16.03.2011
(51) Int. Cl.: A01D 34/90, A01D 75/20

(54) **Protective cover mounting structure for bush cutter**
Schutzabdeckungsmontagestruktur für einen Buschschneider
Structure de montage de couvercle protecteur pour coupeur de buissons

(30) Priority: 17.03.2010 JP 2010061358
(43) Date of publication of application: 21.09.2011
(73) Proprietor: Honda Motor Co., Ltd., Tokyo 107-8556 (JP)
(72) Inventor: Iino, Keiji, Saitama 351-0193 (JP); Sasaki, Hideshi, Saitama 351-0193 (JP)
(74) Representative: Prechtel, Jörg

(56) References cited:
- JP-A- 7 274 654
- JP-A- 9 205 843
- US-A- 5 493 784

## Description

The present invention relates to a protective cover mounting structure for a bush cutter which includes an operating rod extending from a cutter body, a cutter blade rotatably and replaceably attached to the cutter body, and a protective cover covering the cutter blade.

In some of the conventionally-known bush cutters, any one of various types of cutter blades, such as a rotary cutter blade and a string-type cutter blade, is replaceably attached to the cutter body depending on a purpose of cutting (e.g., what is to be cut by the cutter), and a protective cover is changeable or adjustable in its mounted position so as to cover a rear upper portion of the newly attached cutter blade (i.e., cutter blade having replaced the previous one) (see e.g. US-A-5493784).

Among the conventionally-known protective cover mounting structures for such bush cutters is one in which a cover support member for supporting a protective cover has an elongated hole formed therein, the protective cover is lapped on the cover support member, a bolt is inserted through a mounting hole of the protective cover and then through the elongated hole, and a threaded portion of the bolt projecting out of the elongated hole is screwed into a nut so that the protective cover is fixedly supported by the cover support member.

One example of such a protective cover mounting structure is disclosed in Japanese Patent Application Laid-Open Publication No. H09-205843 A, according to which, at the time of replacement of the cutter blade with another available type of cutter blade, such as a rotary cutter blade or a string-type cutter blade, the protective cover can be changed or adjusted in its mounted position in correspondence with the newly attached cutter blade (rotary cutter blade or string-type cutter blade) by the bolt being loosened and moved along the elongated hole.

However, with the bush cutter disclosed in H09-205843 A, the bolt (i.e., fastener member), loosened to change or adjust the mounted position of the protective cover, may sometimes be detached from the nut, so that the fastener member might undesirably fall off the mounting hole and get lost.

In view of the foregoing prior art problems, it is an object of the present invention to provide an improved protective cover mounting structure for a bush cutter which can reliably prevent fastener members from falling off to get lost when the protective cover is adjusted in mounted position.

In order to accomplish the above-mentioned object, the present invention provides an improved protective cover mounting structure for a bush cutter that includes an operating rod extending from a frame support section of a cutter body, a cutter blade replaceably attached to the cutter body and a protective cover for covering the cutter blade, the protective cover mounting structure mounting the protective cover to the frame support section, near a proximal end portion of the operating rod, in such a manner that the protective cover is adjustable in mounted position in correspondence with a type of the cutter blade attached to the cutter body. The protective cover mounting structure of the present invention comprises: a plate member having a through-hole formed therein for passage therethrough of the operating rod, the protective cover having a vertically elongated hole portion and a plurality of position adjusting holes formed around the elongated hole portion, the frame support section having a plurality of supporting holes; a plurality of fastener members provided on the plate member; a male thread portion provided on the frame support section and extending from the frame support section so as to be capable of fittingly passing through the elongated hole portion of the protective cover and through the through-hole of the plate member with the fastener members inserted through the position adjusting holes into the plurality of supporting holes; and a nut member threadedly engageable with the male thread portion. The protective cover and the plate member are fixedly mountable to the frame support section by the nut member threadedly engaging with the male thread portion projecting out of the elongated hole portion of the protective cover and the through-hole of the plate member.

With such arrangements, the protective cover can be positioned at a desired position via the plate member. The protective cover thus positioned can be fixedly mounted to the frame support section by the nut member threadedly engaging the male thread portion. Namely, the protective cover can be readily positioned at a desired position through simple operation of inserting the fastener members (such as fitting pins), through the position adjusting holes of the protective cover, into the plurality of supporting holes formed in the frame support section, and can be readily fixed to the frame support section by the nut member threadedly engaging with the male thread portion. As a result, the present invention can significantly enhance the operability in mounting and dismounting the protective cove to and from the frame support section, and thus allows a human operator to appropriately mount and dismount the protective cover with a simple construction that comprises only the fastener members and nut member.

Preferably, the plurality of position adjusting holes are formed in the protective cover in a plurality of pairs located at different vertical positions to thereby provide a plurality of patterns of engagement between the fastener members and the position adjusting holes such that the protective cover is adjustable in vertical mounted position along the vertically elongated hole portion through selection of a desired one of the patterns of engagement. Thus, the present invention allows the vertical mounted position of the protective cover to be adjusted in accordance with the cutter blade newly attached to the cutter body.

Further, in the present invention, the nut member is fitted over the operating rod, and thus, the protective cover can be kept connected to the operating rod even when the protective cover has been detached from the frame support section. Thus, when the protective cover is adjusted in its mounted position, the nut member can be prevented from falling off to get lost.

In an embodiment of the present invention, the operating rod is capable of passing through the elongated through-hole of the protective cover, and thus, the operating rod is fixedly mountable to the frame support section by passing through the through-hole of the plate member and through the elongated through-hole of the protective cover. Because the operating rod is capable of passing through the elongated through-hole of the protective cover, the protective cover can be kept connected to the operating rod even when the protective cover has been detached from the frame support section. Thus, the present invention can prevent the protective cover from falling off when the protective cover is adjusted in its mounted position.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a side view of a bush cutter to which is applied an embodiment of a protective cover mounting structure of the present invention;
Fig. 2 is a perspective view of the protective cover mounting structure for the bush cutter having a rotary cutter blade attached to a cutter body;
Fig. 3 is a perspective view of the protective cover mounting structure taken in a direction of arrow 3 of Fig. 2;
Fig. 4 is an exploded perspective view of the protective cover mounting structure shown in Fig. 3;
Fig. 5 is a sectional side view of the protective cover mounting structure taken along the axis of a male thread portion shown in Fig. 4;
Fig. 6 is a sectional view taken along line 6 - 6 of Fig. 3;
Fig. 7 is a sectional side view of the protective cover mounting structure taken along the axis of fitting pins shown in Fig. 4;
Fig. 8 is a sectional view of the protective cover mounting structure duly assembled to the bush cutter;
Fig. 9 is an exploded perspective view showing an example in which the protective cover is mounted at a wrong position;
Fig. 10 is a sectional view showing an example manner in which the protective cover is prevented from being mounted at a wrong position;
Fig. 11 is an exploded perspective view of the protective cover mounting structure for the bush cutter having a string-type cutter blade attached to the cutter body;
Fig. 12 is a sectional view of the protective cover mounting structure shown in Fig. 11; and
Fig. 13 is a sectional view of the protective cover mounting structure of Fig. 12 duly assembled to the bush cutter.

Now, a description will be given about an embodiment of a protective cover mounting structure for a bush cutter, with reference to the accompanying drawings, in which the terms "front" and "rear" are used hereinbelow to refer to directions as viewed from a human operator operating a bush cutter.

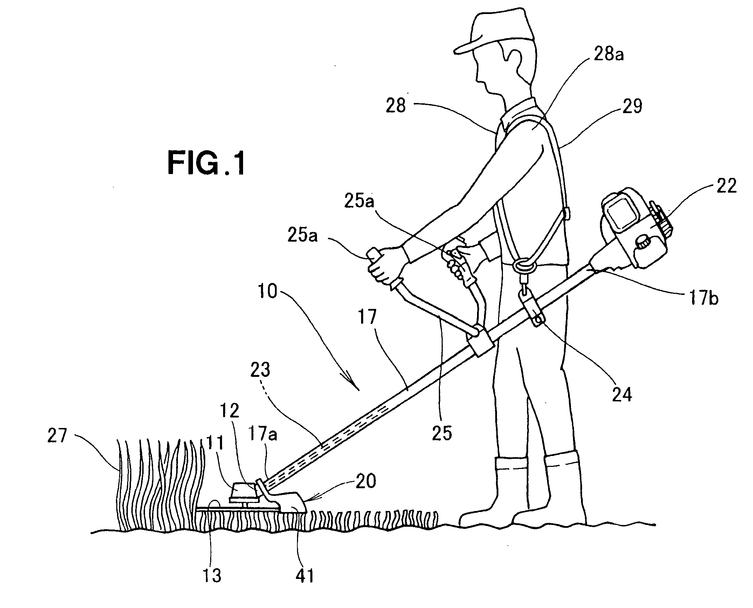

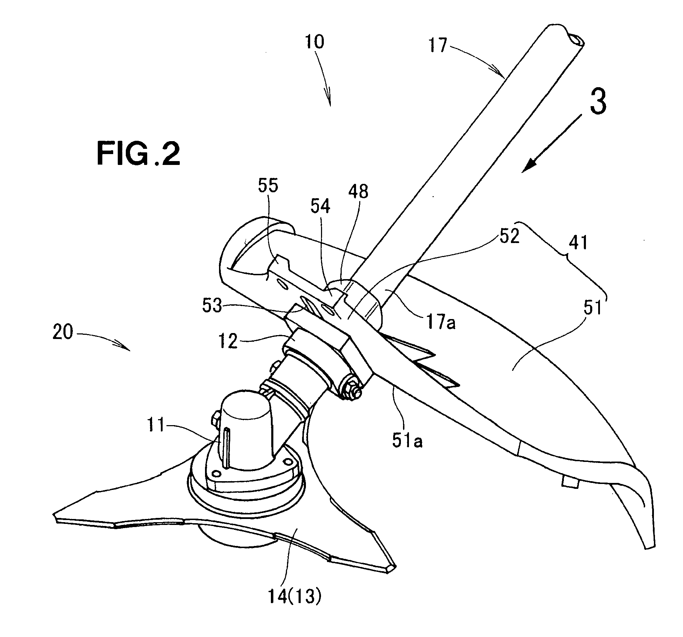

As shown in Fig. 1, the bush cutter 10 includes a cutter blade 13 replaceably attached to a bush cutter body 11, an operating rod (operating frame) 17 extending from a frame support section 12 (see also Fig. 2) of the bush cutter body 11, and the protective cover mounting structure 20 provided on the frame support section 12 near a proximal end portion 17a of the operating rod 17.

The bush cutter 10 also includes an engine 22 provided on a distal end portion 17b of the operating rod 17, a drive shaft 23 inserted through the operating rod 17 for transmitting rotation of the engine 22 to the cutter blade 13, an engagement section 24 provided on the operating rod 17 near the distal end portion 17b, and an operating handle 25 provided on a substantial longitudinally-middle portion of the operating rod 17.

When cutting weed, grass or bush 27 using the bush cutter 10, the human operator hangs a shoulder belt 29 on his or her upper body or shoulder 28a and engages a distal end portion of the belt 29 with the engagement section 24 to thereby support the bush cutter 10 by the upper body or shoulder 28a. In this state, the human operator can cut weed, grass or bush 27 by activating the engine 22 to rotate the cutter blade 13 and swinging the operating rod 17 in left-right and up-down directions while holding left and right grips 25a with both hands.

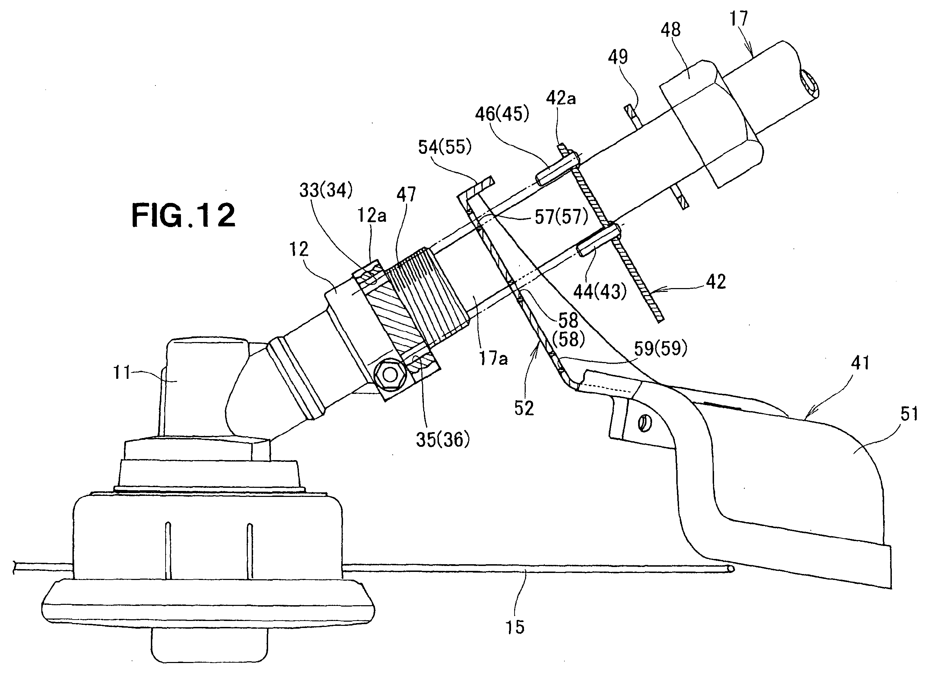

With the bush cutter 10, the cutter blade 13 to be replaceably attached to the cutter body 11 is selectable from among a rotary blade 14 (Fig. 2), a string-type cutter blade (nylon blade) 15 (Fig. 12) and the like, depending on an intended purpose.

Further, the protective cover mounting structure 20 is constructed to allow a mounted position of a protective cover 41 to be changed or adjusted when the cutter blade 13 has been replaced with the rotary cutter blade 14, string-type cutter blade 15 or the like, so as to appropriately cover a rear upper portion of the newly attached rotary cutter blade 14, string-type cutter blade 15 or the like.

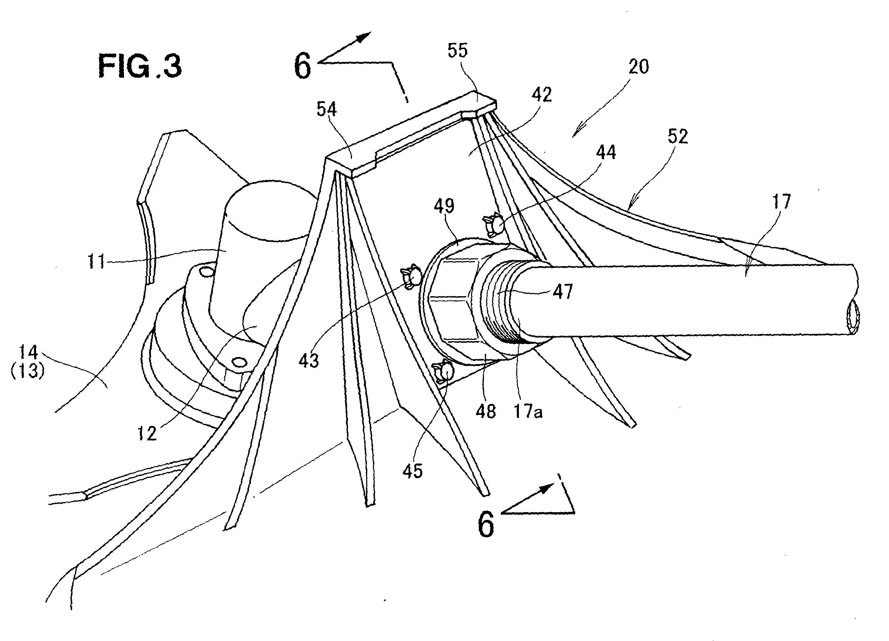

Next, the construction of the protective cover mounting structure 20 will be described in greater detail. First, with reference to Figs. 2 to 8, the following describe an example where the rotary cutter blade 14 is attached to the cutter body 11 as the cutter blade 13.

As shown in Fig. 2 to 4, a hollow male thread portion 47 is provided on the frame support section 12 and extends obliquely rearward and upward from the section 12, and a proximal end portion 17a of the operating rod 17 is fitted in a hollow interior region of the male thread portion 47.

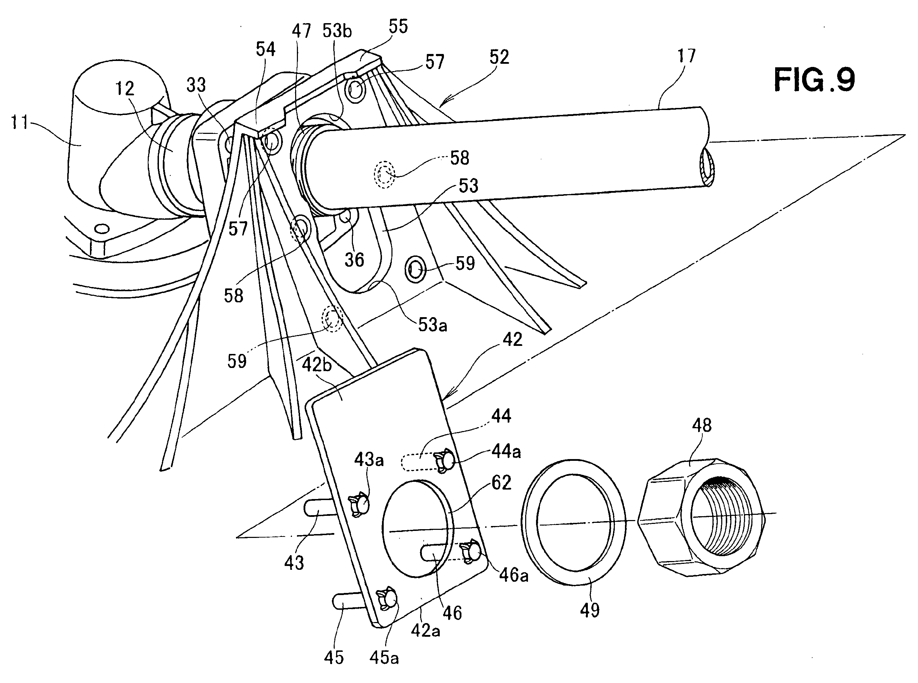

Further, the frame support section 12 has left and right upper supporting holes 33 and 34 and left and right lower supporting holes 35 and 36 (see Fig. 9 for the right lower supporting hole 36) formed therein around the outer periphery of the operating rod 17.

The protective cover mounting structure 20 includes: the protective cover 41 for covering a rear upper portion of the cutter blade 13 (in this case, rotary cutter blade 14) replaceably attached to the cutter body 11; a plate member 42 for positioning the protective cover 41; first to fourth fitting pins (i.e., fastener members) 43 to 46 for positioning the plate member 42; the male thread portion 47 provided on the frame support section 12 for passing through the plate member 42; and a nut member (or fastening member) 48 threadedly engageable with, or screwable onto, the male thread portion 47. A washer 49 is provided between the nut member 48 and plate member 42. Further, the nut member 48 is threadedly engageable with the frame support section 12.

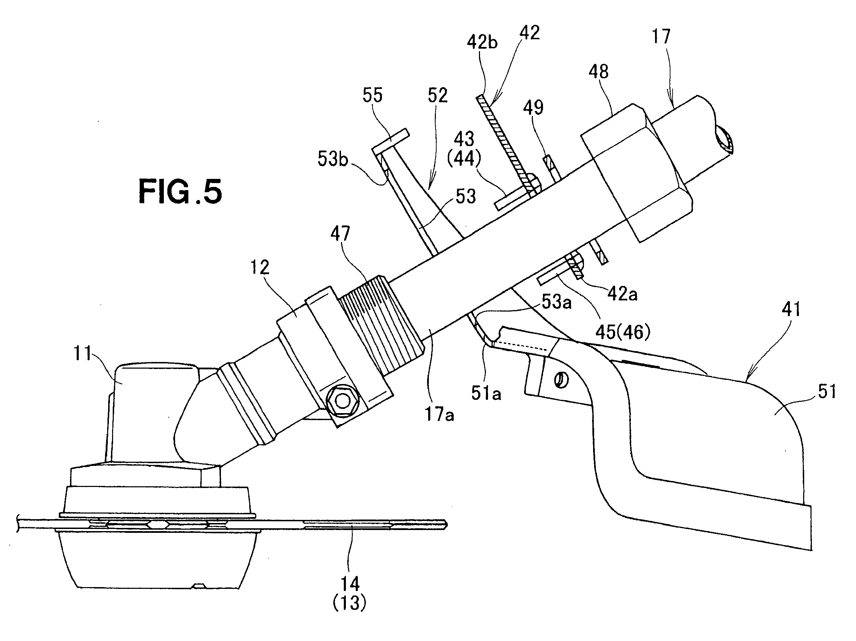

The protective cover 41 includes a cover body 51 for covering a rear upper portion of the rotary cutter blade 14 attached to the cutter body 11, and a cover mounting section 52 extending upward from a front end portion 51a (see also Fig. 5) of the cover body 51.

The cover mounting section 52 has a vertically elongated mounting hole portion 53, a left projecting portion 54 projecting rearward from the upper end of a left wall portion defining the left edge of the mounting hole portion 53, and a right projecting portion 55 projecting rearward from the upper end of a right wall portion defining the right edge of the mounting hole portion 53.

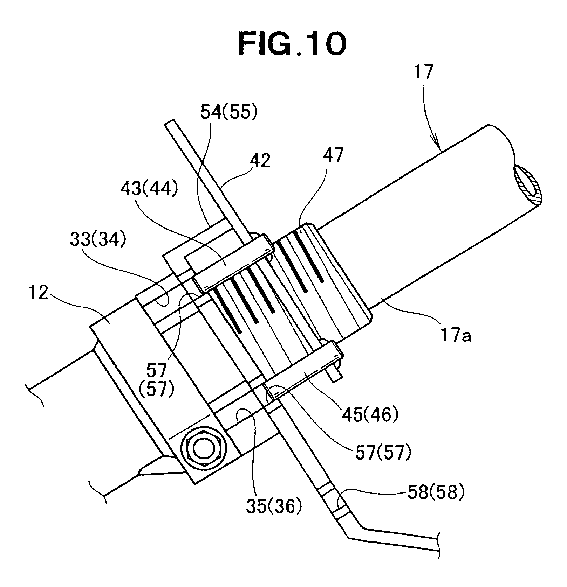

Namely, the left projecting portion 54 is provided adjacent to the upper left side of the mounting hole portion 53, while the right projecting portion 55 is provided adjacent to the upper right side of the mounting hole portion 53. By the provision of the left and right projecting portions 54 and 55 on the cover mounting section 52, it is possible to prevent the plate member 42 from being mounted at a wrong position deviated from a predetermined position corresponding to a type of the cutter blade 13 attached to the cutter body 11. Therefore, the plate member 42 can be reliably mounted at the predetermined position, so that the protective cover 41 can be mounted at a predetermined position corresponding to the attached cutter blade. Functions of the left and right projecting portions 54 and 55 will be described in greater detail later, with reference to Figs. 9 and 10.

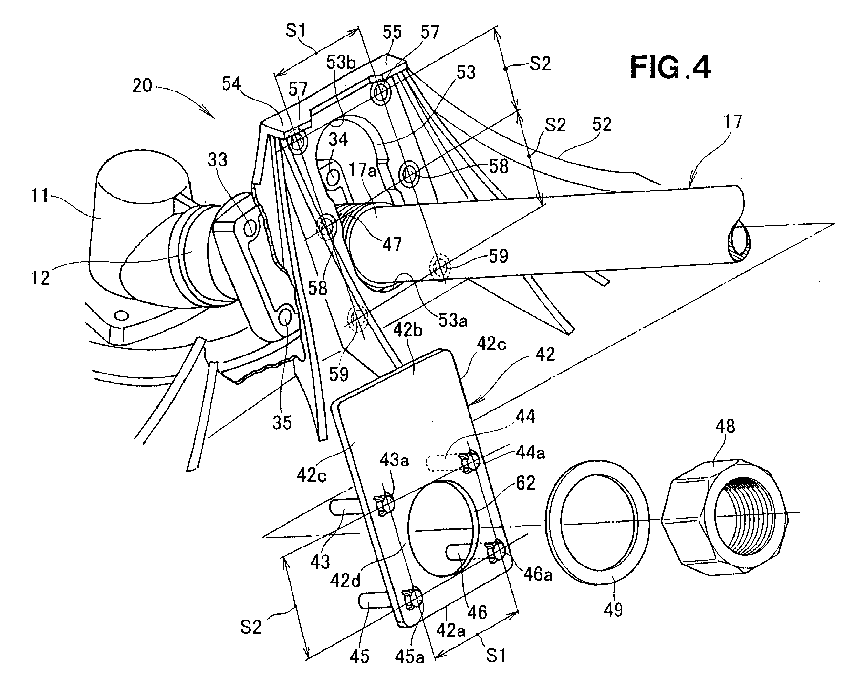

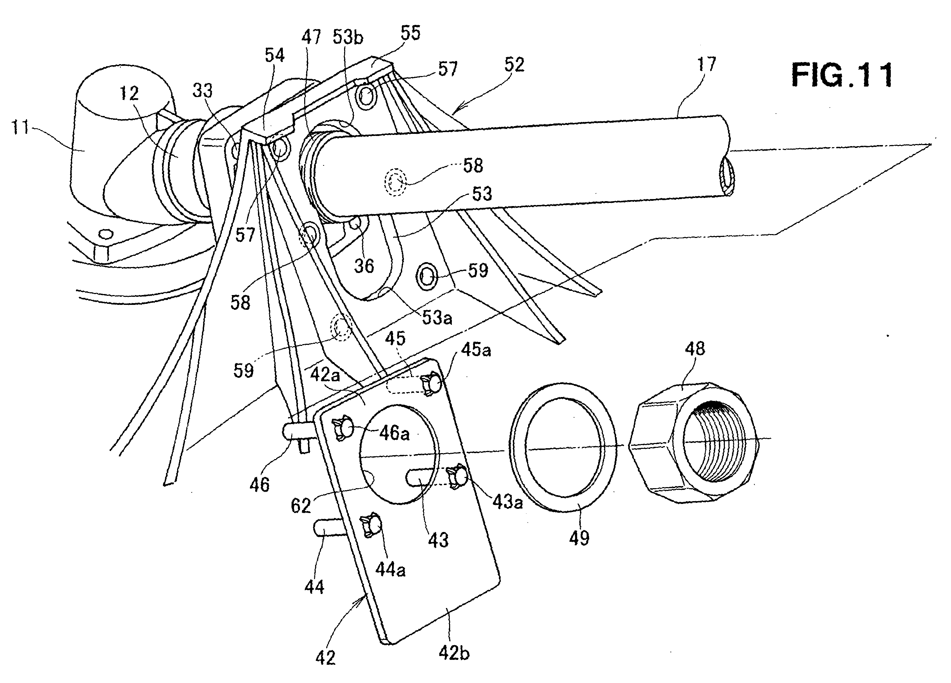

The operating rod 17 is fittable in the vertically elongated mounting hole portion 53, i.e. the mounting hole portion 53 is fittable over the operating rod 17. More specifically, the operating rod 17 can be positioned in the mounting hole portion 53 close to a bottom surface 53a of the hole portion 53 (i.e., in a lower position) as shown in Fig. 4 and positioned in the mounting hole portion 53 close to a top surface 53b of the hole portion 53 (i.e., in an upper position) as shown in Fig. 11.

With the operating rod 17 fitted in the mounting hole portion 53, i.e. with the mounting hole portion 53 fitted over the operating rod 17, the protective cover 41 can be kept connected to the operating rod 17 even when the protective cover 41 has been detached from the frame support section 12. Thus, when the protective cover 41 is adjusted in its mounted position, the protective cover 41 can be prevented from falling off.

Further, because the mounting hole portion 53 is formed in a vertically elongated shape, it can be moved or displaced in a vertical direction (i.e., in a long-axis direction) thereof relative to the operating rod 17. More specifically, the mounted position of the protective cover 41 can be adjusted between the lower position close to the bottom surface 53a of the hole portion 53 and the upper position close to the top surface 53b of the hole portion 53.

Further, the cover mounting section 52 has: left and right upper position adjusting holes 57 formed in upper end regions of the left and right wall portions of the hole portion 53 with a predetermined horizontal interval S1 therebetween; left and right middle position adjusting holes 58 formed in middle regions of the left and right wall portions with the predetermined horizontal interval S1 therebetween; and left and right lower position adjusting holes 59 formed in lower end regions of the left and right wall portions with the predetermined horizontal interval S1 therebetween.

Further, the left upper position adjusting hole 57, left middle position adjusting hole 58 and left lower position adjusting hole 59 are aligned vertically on an imaginary straight line with predetermined equal vertical intervals S2 therebetween. Similarly, the right upper position adjusting hole 57, right middle position adjusting hole 58 and right lower position adjusting hole 59 are aligned vertically on an imaginary straight line with the predetermined equal vertical intervals S2 therebetween.

In the aforementioned manner, the cover mounting section 52 has three pairs of the left and right position adjusting holes 57, 58 and 59 formed therein at three different vertical positions, to provide a plurality of patterns of engagement between the adjusting holes 57, 58 and 59 and the fitting pins (faster members) 43 to 46 and thereby permit adjustment of the mounted position of the protective cover 41 relative to the frame support section 12. Namely, the protective cover 41 is adjustable in vertical mounted position through selection of a desired one of the patterns of engagement between the adjusting holes 57, 58 and 59 and the fitting pins (faster members) 43 to 46.

The plate member 42 is in the form of a vertically elongated plate; that is, a vertical dimension between one end side 42a and the other end side 42b of the plate member 42 is greater than a horizontal dimension between left and right sides 42c of the plate member 42.

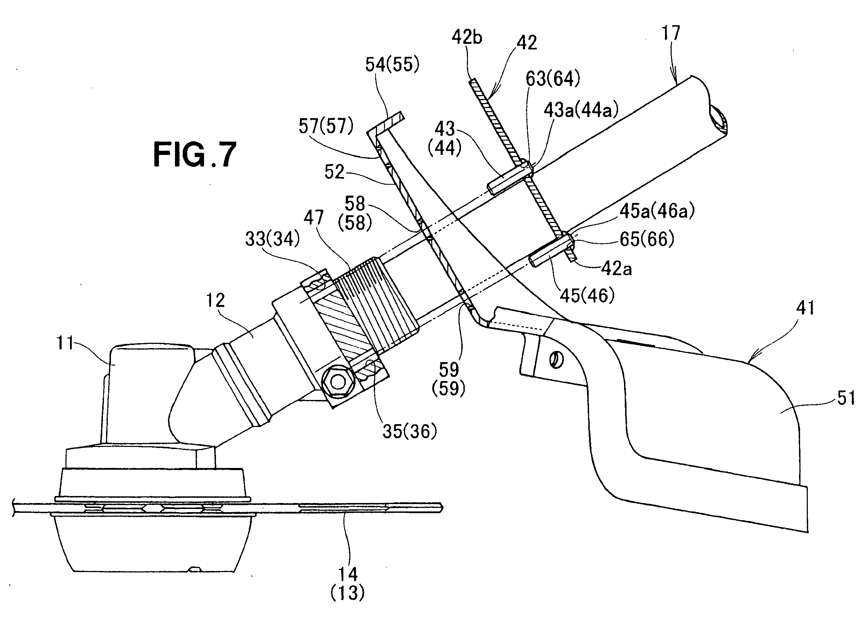

The plate member 42 has a plate through-hole 62 formed in a region 42d thereof close to the one end side 42a, and first to fourth mounting holes 63 to 66 (see Fig. 7) formed around the plate through-hole 62.

When the rotary cutter blade 14 is attached to the bush cutter 10, the human operator positions the plate member 42 in such a manner that the plate through-hole 62 is located in a lower position close to the bottom surface 53a. Because the plate member 42 is in the form of a vertically elongated plate as noted above, the elongated mounting hole portion 53 can be covered with the plate member 42 mounted to the cover mounting section 52; namely, the mounting hole portion 53 can be masked with the plate member 42 in such a manner that it is invisible to the human operator.

The plate through-hole 62 is a circular hole formed for passage therethrough of the operating rod 17. Thus, the plate member 42 can be connected to the operating rod 17 by the operating rod 17 being passed through the plate through-hole 62. In this way, the plate member 42 can be prevented from falling off the operating rod 17 to get lost, when the nut member 48 is loosened to change or adjust the mounted position of the protective cover 41.

As shown in Figs. 4 and 7, the first fitting pin 43 has a proximal end portion 43a fixedly fitted in the first mounting hole 63 of the plate member 42, the second fitting pin 44 has a proximal end portion 44a fixedly fitted in the second mounting hole 64, the third fitting pin 45 has a proximal end portion 45a fixedly fitted in the third mounting hole 65, and the fourth fitting pin 46 has a proximal end portion 46a fixedly fitted in the fourth mounting hole 66. Thus, the first to fourth fitting pins 43 to 46 are connected together via the plate member 42.

The first to fourth fitting pins 43 to 46 can be connected together to the operating rod 17 via the plate member 42 by the operating rod 17 being passed through the plate through-hole 62. Thus, when the nut 48 is loosened to adjust the mounted position of the protective cover 41, the first to fourth fitting pins 43 to 46 can be reliably prevented from falling off the operating rod 17 to get lost.

With the proximal end portions 43a to 46a of the first to fourth fitting pins 43 to 46 fixedly fitted in the corresponding mounting holes 63 to 66 of the plate member 42, the first and second fitting pins 43 and 44 are located with the predetermined horizontal interval S1 therebetween, and the third and fourth fitting pins 45 and 46 are located with the predetermined horizontal interval S1 therebetween. Further, the first and third fitting pins 43 and 45 are located with the predetermined vertical interval S2 therebetween, and the second and fourth fitting pins 44 and 46 are located with the predetermined vertical interval S2 therebetween.

As noted above, the cover mounting section 52 has pairs of the left and right upper position adjusting holes 57, left and right middle position adjusting holes 58, and left and right lower position adjusting holes formed at three different vertical positions to provide a plurality of patterns of engagement between the adjusting holes 57, 58 and 59 and the fitting pins 43 to 46 and thereby permit adjustment of the mounted position of the protective cover 41 relative to the frame support section 12. Thus, when the cutter blade 13 has been replaced with the rotary cutter blade 14, string-type cutter blade 15 or the like, the protective cover 41 can be adjusted in mounted position in correspondence with the cutter blade newly attached to the cutter body 11.

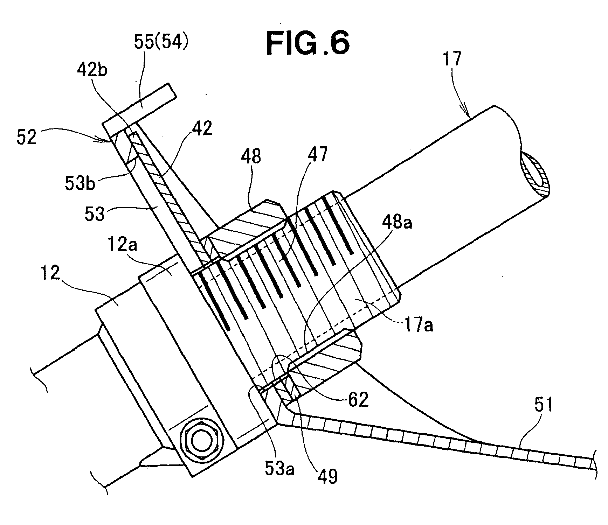

As shown in Figs. 5 and 6, the male thread portion 47 extends obliquely rearward and upward from the frame support section 12, and the proximal end portion 17a of the operating rod 17 is fitted in the hollow interior region of the male thread portion 47. The male thread portion 47 can be passed through the mounting hole portion 53 of the cover mounting section 52 and through the through-hole 62 of the plate member 42.

The nut member 48, having a female thread portion (hereinafter referred to as "internally-threaded hole") 48a extending in its axial direction, is screwable onto a distal end region of the male thread portion 47 projecting out of the through-hole 62. Namely, the internally-threaded hole 48a is threadedly engageable with the male thread portion 47, and the operating rod 17 fitted in the male thread portion 47 can be passed through the internally-threaded hole 48a, so that the nut member 48 can be connected to the operating rod 17.

Thus, even when the nut member 48 is loosened and detached from the male thread portion 47 in order to adjust the mounted position of the protective cover 41, the nut member 48 can be kept connected to the operating rod 17. In this manner, the nut member 48 can be prevented from falling off the operating rod 17 to get lost when the mounted position of the protective cover 41 is adjusted.

The following describe a manner in which the protective cover 41 is assembled to the cutter body 11 of the bush cutter 10 by means of the nut member 48. When the rotary cutter blade 14 is attached to the bush cutter 10, the human operator positions the plate member 62 in such a manner that the plate through-hole 62 is located in the lower position, as shown in Fig. 4.

Then, as shown in Figs. 4 and 7, the first fitting pin 43 is passed through the left middle position adjusting hole 58 of the plate member 42 and then inserted into the left upper supporting hole 33 of the frame support section 12, and the second fitting pin 44 is passed through the right middle position adjusting hole 58 of the plate member 42 and then inserted into the right upper supporting hole 34. Further, the third fitting pin 45 is passed through the left lower position adjusting hole 59 of the plate member 42 and then inserted into the left lower supporting hole 35, and the fourth fitting pin 46 is passed through the right lower position adjusting hole 59 of the plate member 42 and then inserted into the right lower supporting hole 36.

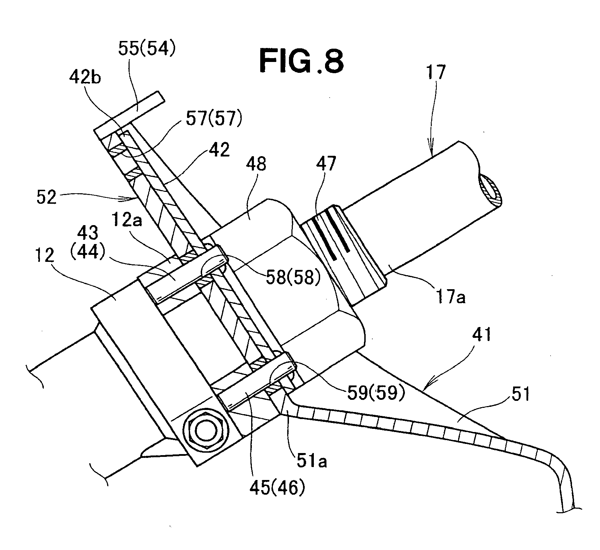

Then, as shown in Fig. 8, the cover mounting section 52 is lapped on the frame support member 42, and the plate member 42 is lapped on the cover mounting section 52.

Then, as shown in Fig. 6, the mounting hole portion 53 of the cover mounting section 52 and the through-hole 62 of the plate member 42 are fitted over the male thread portion 47 by the cover mounting section 52 and the plate member 42 being lapped over the frame support section 12. Thus, the plate member 42 can be positioned relative to the frame support section 12 via the cover mounting section 52, and the protective cover 41 can be positioned relative to the frame support section 12 via the plate member 42.

As a consequence, the male thread portion 47 projects rearwardly out of the through-hole 62 of the plate member 42. The internally-threaded hole 48a of the nut member 48 is brought into threaded engagement with the male thread portion 47 projecting out of the through-hole 62.

Thus, the cover mounting section 52 and the plate member 42 can be fixedly mounted to the frame support section 12 with the plate member 42 lapped on the cover mounting section 52 of the protective cover 41. More specifically, the cover mounting section 52 and the plate member 42 are fixed to a region 12a of the frame support section 12 near the proximal end portion 17a of the operating rod 17.

In this state, the other end side 42b of the plate member 42 is located under the left and right projecting portions 54 and 55 of the cover mounting section 52 and hence does not interfere with the left and right projecting portions 54 and 55. Because the other end side 42b of the plate member 42 does not interfere with the left and right projecting portions 54 and 55, the plate member 42 can be mounted at the predetermined position, corresponding to the attached cutter blade, with the plate through-hole 62 located in the lower position (see Figs. 4 and 6).

Thus, the plate through-hole 62 is located close to the bottom surface 53a of the vertically elongated mounting hole portion 53, and the operating rod 17 passed through the plate through-hole 62 is retained adjacent to the bottom surface 53a of the mounting groove portion 53, as shown in Figs. 4 and 6.

In this way, the protective cover 41 can be mounted at the predetermined position, corresponding to the rotary cutter blade 14, by use of the plate member 42. Because the mounting groove portion 53 can be covered with the plate member 42 duly mounted to the cover mounting section 52, the mounting groove portion 53 can be masked in such a manner that it is invisible to the human operator.

Further, the protective cover 41 can be readily positioned through simple operation of inserting the first to fourth fitting pins 43 to 46, through four of the left and right upper position adjusting holes 57, left and right middle position adjusting holes 58 and left and right lower position adjusting holes 59, into the left and right upper supporting holes 33 and 34 and left and right lower supporting holes 35 and 36 of the frame support section 12.

After such positioning via the first to fourth fitting pins 43 to 46, the protective cover 41 can be mounted to the frame support section 12 through simple operation of threadedly engaging the nut member 48 with the male thread portion 47.

In the aforementioned manner, the instant embodiment can significantly enhance the operability in mounting and dismounting the protective cover 41 to and from the frame support section 12, and can appropriately mount and dismount the protective cover 41 with a simple construction comprising only the first to fourth fitting pins 43 to 46 and nut member 48.

With reference to Figs. 9 and 10, a description will be given about an example manner in which the embodiment of the protective cover mounting structure prevents the protective cover 41 from being mounted at a wrong position.

The human operator might sometimes mistakenly insert the first and second fitting pins 43 and 44 into the left and right upper position adjusting holes 57 and insert the third and fourth fitting pins 45 and 46 into the left and right middle position adjusting holes 58 with the proximal end portion 17a of the operating rod 17 and plate through-hole 62 positioned in the upper position in the elongated mounting hole portion 53 close to the top surface 53b. In such a case, the protective cover 41 would be mounted at a wrong position that does not correspond to the rotary cutter blade 14. If the protective cover 41 is mounted at a wrong position like this, there would occur the inconvenience, among others, that the mounting hole portion 53 of the cover mounting section 52 cannot be covered with the plate member 42.

This is why the instant embodiment of the protective cover mounting structure includes the left projecting portion 54 projecting rearward from the upper end of the left wall portion of the cover mounting section 52, and the right projecting portion 55 projecting rearward from the upper end of the right wall portion of the cover mounting section 52. Thus, if the plate member 42 is positioned at a wrong position, deviated from the predetermined position, in such a manner that the plate through-hole 62 is positioned close to the top surface 53b, the plate member 42 would abut against the left and right projecting portions 54 and 55.

With the plate member 42 abutting against the left and right projecting portions 54 and 55 as above, the plate member 42 is retained floating at a predetermined distance from the cover mounting section 52, so that the first and second fitting pins 43 and 44 would be located short of the left and right upper supporting holes 33 and 34 while the third and fourth fitting pins 45 and 46 would be located short of the left and right lower supporting holes 35 and 36. In this way, the instant embodiment can prevent the protective cover 41 from being mounted at a wrong position, i.e. prevent the first to fourth fitting pins 43 to 46 from being mistakenly inserted into the left and right upper supporting holes 33 and 34 and upper threaded holes 30 and 31 and left and right lower supporting holes 35 and 36.

Namely, by the provision of the left and right projecting portions 54 and 55 on the cover mounting section 52, the human operator can readily know that he or she is mounting the plate member 42 at a wrong position, and thus can mount the plate member 42 at the predetermined position with increased ease.

By merely mounting the plate member 42 at the predetermined position, the human operator can readily mount the protective cover 41 at the predetermined position (as shown in Figs. 2 and 4) by use of the plate member 42. As a consequence, the human operator can readily mount the protective cover 41 at the predetermined position corresponding to the cutter blade (in this case, rotary cutter blade 14) attached to the cutter body 11, which can therefore achieve an enhanced operability of the bush cutter 10.

Next, with reference to Figs. 11 to 13, a description will be given about an example where the string-type cutter blade 15 is attached to the cutter body 11 as the cutter blade 13.

When the string-type cutter blade 15 is attached to the cutter body 11, the human operator positions the plate member 42 in such a manner that the plate through-hole 62 is located in the upper position remote from the bottom surface 53a.

Then, the human operator inserts the fourth fitting pin 46 through the left upper position adjusting hole 57 of the cover mounting section 52 into the left upper supporting hole 33 of the frame support section 12, and inserts the third fitting pin 45 through the right upper position adjusting hole 57 into the right upper supporting hole 34. Further, the human operator inserts the second fitting pin 44 through the second middle position adjusting hole 58 into the left lower supporting hole 35, and inserts the first fitting pin 43 through the right middle position adjusting hole 58 into the right lower supporting hole 36.

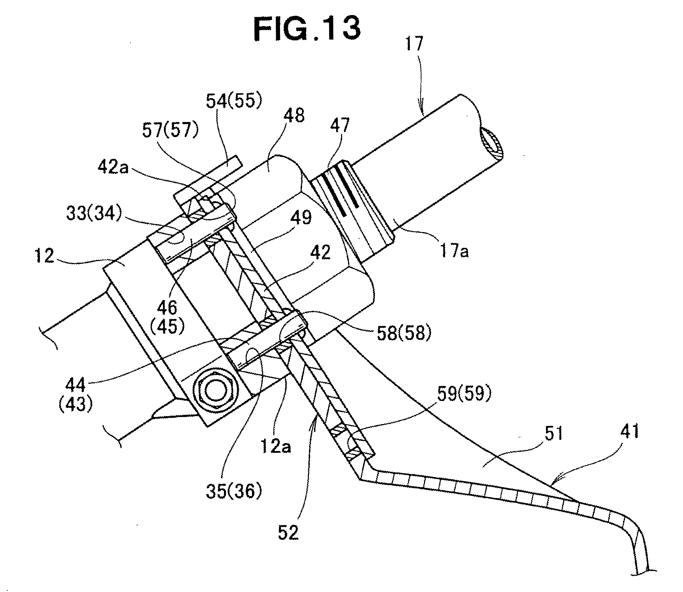

As shown in Fig. 13, the cover mounting section 52 is lapped on the frame support section 12, and the plate member 42 is lapped on the cover mounting section 52. By the cover mounting section 52 and plate member 42 being lapped over the frame support section 12 like this, the mounting hole portion 53 of the cover mounting section 52 (see Fig. 11) and the plate through-hole 62 of the plate member 42 (see Fig. 9) are fitted over the male thread portion 47.

Thus, the thread portion 47 projects rearwardly out of the plate through-hole 62, and the internally-threaded hole 48a of the nut member 48 is threadedly engaged with the thread portion 47 projecting out of the plate through-hole 62 (see Fig. 6).

Thus, the cover mounting section 52 and the plate member 42 can be fixed to the frame support section 12 with the plate member 42 lapped on the cover mounting section 52 of the protective cover 41. More specifically, the cover mounting section 52 and the plate member 42 are fixed to the region 12a of the frame support section 12 near the proximal end portion 17a of the operating rod 17.

In this state, the one end side 42a of the plate member 42 is located under the left and right projecting portions 54 and 55 and hence does not interfere with the left and right projecting portions 54 and 55. Because the one end side 42a of the plate member 42 does not interfere with the left and right projecting portions 54 and 55, the plate member 42 can be mounted at th predetermined position with the plate through-hole 62 located in the upper position (see Fig. 11 and 12) close to the top surface 53b.

With the plate through-hole 62 located in the upper position close to the top surface 53b, the operating rod 17 passed through the plate through-hole 62 is retained in the upper position close to the top surface 53b.

In this way, the protective cover 41 can be mounted at the predetermined position, corresponding to the string-type cutter blade 15, by use of the plate member 42. Because the mounting hole portion 53 of the cover mounting section 52 can be covered with the plate member 42 mounted to the cover mounting section 52, the mounting hole portion 53 can be masked in such a manner that it is invisible to the human operator.

It should be appreciated that the protective cover mounting structure 20 is not limited to the above-described embodiment and may be modified variously.

For example, whereas the embodiment has been described above in relation to the case where the left and right projecting portions 54 and 55 are provided on the cover mounting section 52, such projecting portions 54 and 55 need not necessarily be provided on the cover mounting section 52.

Further, whereas the embodiment has been described above in relation to the case where the four, i.e. first to fourth, fitting pins (fastener members) 43 to 46 are used as fitting pins for mounting the protective cover 41 to the cutter body 11, the present invention is not so limited, and any other number of the mounting fitting pins than four, such as three, may be used.

Further, whereas the embodiment has been described above in relation to the case where the cover mounting section 52 has the mounting hole portion 53, the present invention is not so limited, and, for example, the cover mounting section 52 may have a vertically elongated U-shape groove portion with an upward opening.

Further, the bush cutter 10, cutter body 11, cutter blade 13, rotary cutter blade 14, string-type cutter blade 15, operating rod 17, supporting hole 33 - 36, protective cover 41, plate member 42, fitting pin 43 - 46, male thread portion 47, nut member 48, vertically elongated mounting hole portion 53, adjusting hole 57, 58, position adjusting hole 58, 59, plate through-hole 62, etc. are not limited to the above-described shapes and constructions and may be modified as necessary.

The present invention is well suited for application to bush cutters which include an operating rod extending from a cutter body, a cutter blade rotatably mounted on the cutter body, and a protective cover covering the cutter blade.

## Claims

1. A protective cover mounting structure (20) for a bush cutter (10) that includes an operating rod (17) extending from a frame support section (12) of a cutter body (11), a cutter blade (13) replaceably attached to the cutter body (11) and a protective cover (41) for covering the cutter blade, the protective cover mounting structure (20) mounting the protective cover (41) to the frame support section, near a proximal end portion (17a) of the operating rod (17), in such a manner that the protective cover (41) is adjustable in mounted position in correspondence with a type of the cutter blade (13) attached to the cutter body,
**characterized in that** the protective cover mounting structure (20) comprises:
a plate member (42) having a through-hole (62) formed therein for passage therethrough of the operating rod, the protective cover (41) having a vertically elongated hole portion (53) and a plurality of position adjusting holes (57 - 59) formed around the elongated hole portion (53), the frame support section (12) having a plurality of supporting holes (33 - 36);
a plurality of fastener members (43 - 46) provided on the plate member (42);
a male thread portion (47) provided on the frame support section and extending from the frame support section so as to be capable of fittingly passing through the elongated hole portion (53) of the protective cover (41) and through the through-hole (62) of the plate member with the fastener members (43 - 46) inserted through the position adjusting holes (57 - 59) into the plurality of supporting holes (33 - 36); and
a nut member (48) threadedly engageable with the male thread portion (47), and
**in that** the protective cover (41) and the plate member (42) are fixedly mountable to the frame support section (12) by the nut member (48) threadedly engaging with the male thread portion (47) projecting out of the elongated hole portion (53) of the protective cover (41) and the through-hole (62) of the plate member (42).

2. The protective cover mounting structure of claim 1, wherein the operating rod (17) is capable of passing through the elongated through-hole (53) of the protective cover (41), the operating rod being fixedly mountable to the frame support section (12) by passing through the through-hole (62) of the plate member (42) and through the elongated through-hole (53) of the protective cover (41).

3. The protective cover mounting structure of claim 1 or 2, wherein the plurality of position adjusting holes (57 - 59) is formed in the protective cover in a plurality of pairs located at different vertical positions to thereby provide a plurality of patterns of engagement between the fastener members (43 - 46) and the position adjusting holes (57 - 59) such that the protective cover (41) is adjustable in vertical mounted position through selection of a desired one of the patterns of engagement.

## Patentansprüche

1. Schutzabdeckungsmontagestruktur (20) für eine Buschschneidemaschine (10), umfassend eine Bedienungsstange (17), welche sich von einem Rahmentragabschnitt (12) von einem Schneidmaschinenkörper (11) aus erstreckt, eine Schneidmaschinenklinge (13), welche ersetzbar an dem Schneidmaschinenkörper (11) angebracht ist, und eine Schutzabdeckung (41), um die Schneidmaschinenklinge abzudecken, wobei die Schutzabdeckungsmontagestruktur (20) die Schutzabdeckung (41) nahe einem proximalen Endabschnitt (17a) von der Bedienungsstange (17) in einer solchen Weise an den Rahmentragabschnitt montiert, dass die Schutzabdeckung (41) gemäß einer Art der an dem Schneidmaschinenkörper angebrachten Schneidmaschinenklinge (13) in der montierten Position einstellbar ist, **dadurch gekennzeichnet, dass** die Schutzabdeckungsmontagestruktur (20) umfasst:
ein Plattenelement (42), welches ein Durchgangsloch (62) hat, welches darin für einen Durchgang von der Bedienungsstange **dadurch** ausgebildet ist, wobei die Schutzabdeckung (41) einen vertikal länglichen Lochabschnitt (53) und eine Mehrzahl von Positionseinstelllöchern (57 - 59) hat, welche um den länglichen Lochabschnitt (53) herum ausgebildet sind, wobei der Rahmentragabschnitt (12) eine Mehrzahl von Traglöchern (33 - 36) hat;
eine Mehrzahl von Befestigungselementen (43 - 46), welche an dem Plattenelement (42) vorgesehen sind;
einen Außengewindeabschnitt (47), welcher an dem Rahmentragabschnitt vorgesehen ist und sich von dem Rahmentragabschnitt derart erstreckt, dass er durch den länglichen Lochabschnitt (53) von der Schutzabdeckung (41) und durch das Durchgangsloch (62) von dem Plattenelement passend passieren kann, wobei die Befestigungselemente (43 - 46) durch die Positionseinstelllöcher (57 - 59) in die Mehrzahl von Traglöchern (33 - 36) eingesetzt sind; und
ein Mutter-Element (48), welches mit dem Außengewindeabschnitt (47) in Gewindeeingriff treten kann, und
dass die Schutzabdeckung (41) und das Plattenelement (42) fest an den Rahmentragabschnitt (12) durch das Mutter-Element (48) montierbar sind, welches mit dem Außengewindeabschnitt (47) im Gewindeeingriff steht, welcher von dem länglichen Lochabschnitt (53) von der Schutzabdeckung (41) und dem Durchgangsloch (62) von dem Plattenelement (42) vorsteht.

2. Schutzabdeckungsmontagestruktur nach Anspruch 1, wobei die Bedienungsstange (17) durch das längliche Durchgangsloch (53) von der Schutzabdeckung (41) passieren kann, die Bedienungsstange fest an dem Rahmentragabschnitt (12) montierbar ist, indem sie durch das Durchgangsloch (62) von dem Plattenelement (42) und durch das längliche Durchgangsloch (53) von der Schutzabdeckung (41) passiert.

3. Schutzabdeckungsmontagestruktur nach Anspruch 1 oder 2, wobei die Mehrzahl von Positionseinstelllöchern (57 - 59) in der Schutzabdeckung in einer Mehrzahl von Paaren ausgebildet sind, welche an verschiedenen vertikalen Positionen angeordnet sind, um auf diese Weise eine Mehrzahl von Eingriffsmustern zwischen den Befestigungselementen (43 - 46) und den Positionseinstelllöchern (57 - 59) bereitzustellen, so dass die Schutzabdeckung (41) durch eine Auswahl eines gewünschten der Eingriffsmuster in einer vertikal montierten Position einstellbar ist.

## Revendications

1. Structure de montage de couvercle de protection (20) pour un coupeur de buissons (10) qui comprend une tige de commande (17) s'étendant à partir d'une section de support de châssis (12) d'un corps de dispositif de coupe (11), une lame de dispositif de coupe (13) fixée de manière remplaçable au corps de dispositif de coupe (11) et un couvercle de protection (41) pour recouvrir la lame de dispositif de coupe, la structure de montage de couvercle de protection (20) montant le couvercle de protection (41) sur la section de support de châssis, à proximité d'une partie d'extrémité proximale (17a) de la tige de commande (17), de sorte que le couvercle de protection (41) est ajustable en position montée en correspondance avec un type de la lame de dispositif de coupe (13) fixée sur le corps de dispositif de coupe,
**caractérisée en ce que** la structure de montage de couvercle de protection (20) comprend :
un élément de plaque (42) ayant un trou de passage (62) formé à l'intérieur de ce dernier pour passer à travers la tige de commande, le couvercle de protection (41) ayant une partie de trou verticalement allongé (53) et une pluralité de trous de réglage de position (57 - 59) formés autour de la partie de trou allongé (53), la section de support de châssis (12) ayant une pluralité de trous de support (33 - 36) ;
une pluralité d'éléments de fixation (43 - 46) prévus sur l'élément de plaque (42) ;
une partie de filetage mâle (47) prévue sur la section de support de châssis et s'étendant à partir de la section de support de châssis afin de pouvoir passer parfaitement à travers la partie de trou allongé (53) du couvercle de protection (41) et à travers le trou de passage (62) de l'élément de plaque avec les éléments de fixation (43 - 46) insérés à travers les trous de réglage de position (57 - 59) dans la pluralité de trous de support (33 - 36) ; et
un élément d'écrou (48) pouvant se mettre en prise par filetage avec la partie de filetage mâle (47), et **en ce que** le couvercle de protection (41) et l'élément de plaque (42) peuvent être montés de manière fixe sur la section de support de châssis (12) par l'élément d'écrou (48) qui se met en prise par filetage avec la partie de filetage mâle (47) faisant saillie à l'extérieur de la partie de trou allongé (53) du couvercle de protection (41) et du trou de passage (62) de l'élément de plaque (42).

2. Structure de montage de couvercle de protection selon la revendication 1, dans laquelle la tige de commande (17) peut passer à travers le trou de passage allongé (53) du couvercle de protection (41), la tige de commande étant montée de manière fixe sur la section de support de châssis (12) en passant à travers le trou de passage (62) de l'élément de plaque (42) et à travers le trou de passage allongé (53) du couvercle de protection (41).

3. Structure de montage de couvercle de protection selon la revendication 1 ou 2, dans laquelle la pluralité de trous de réglage de position (57 - 59) est formée dans le couvercle de protection dans une pluralité de paires positionnées à différentes positions verticales pour fournir ainsi une pluralité de modèles de mise en prise entre les éléments de fixation (43 - 46) et les trous de réglage de position (57 - 59) de sorte que le couvercle de protection (41) peut être ajusté en position montée verticale par le biais de la sélection d'un modèle souhaité des modèles de mise en prise.
